# FASCICULE DE BREVET EUROPEEN

(11) **EP 1 630 589 B1**
(45) Date de publication et mention de la délivrance du brevet: **20.04.2011**
(21) Numéro de dépôt: 05107653.7
(22) Date de dépôt: 19.08.2005
(51) Int. Cl.: G02B 27/58

(54) **Instrument d'observation à synthèse d'ouverture optique et champ d'observation, et/ou résolution, variable**
Observing instrument with optical synthetic aperture and with a variable object field of view and/or resolution
Observationsinstrument mit optischer synthetischer Apertur und mit variablem Objektfeld und/oder Auflösung

(30) Priorité: 31.08.2004 FR 0451939
(43) Date de publication de la demande: 01.03.2006
(73) Titulaire: THALES, 92200 Neuilly-sur-Seine (FR)
(72) Inventeur: Thomas, M. Eric, 06210 Mandelieu (FR); Falzon, M. Frédéric, 06580 Pegomas (FR)
(74) Mandataire: Esselin, Sophie

(56) Documents cités:
- GLINDENMANN A. ET AL: "The VLT Interferometer: a unique instrument for high-resolution astronomy" INTERNET ARTICLE, [Online] mars 2000 (2000-03), XP002324455 Extrait de l'Internet: URL:http://www.eso.org/projects/vlti/publi nk/spie-muenchen2000/spie4006-01-vlti-slid es.pdf> [extrait le 2005-04-13]
- LOPEZ B. ET AL: "APreS-MIDI, APertutre Synthesis in the MID-Infrared with the VLTI" PROCEEDINGS OF SPIE, INTERFEROMETRY FOR OPTICAL ASTRONOMY II, vol. 4838, février 2003 (2003-02), pages 1011-1017, XP002324456 BELLINGHAM, VA, US
- UNWIN S. C. ET AL: "The Space Interferometry Mission" PROCEEDINGS OF SPIE, INTERFEROMETRY FOR OPTICAL ASTRONOMY, vol. 4006, juillet 2000 (2000-07), pages 754-761, XP002324457 BELLINGHAM, VA, US

## Description

L'invention concerne le domaine des instruments d'observation dits « à synthèse d'ouverture optique », et notamment ceux embarqués dans des satellites.

Il existe des instruments à synthèse d'ouverture optique tels que ceux décrits notamment dans le document Glindenmann A. et al : « The VLT Interferometer : a unique instrument for high resolution astronomy » internet article, on line ! mars 2000, XP002324455, le document « Après-Midi : aperture synthesis in the mid-IR with the VLTI », par B. Lopez et al, XP2324456, ou le document Unwin S. C. et al : « The Space Interferometry Mission » Proceedings of SPIE, Interferometry for optical astronomy, vol 4006, juillet 2000, pages 754-761, XP002324457. Ces différents systèmes présentent tous l'inconvénient d'être adaptés à une détection d'objets célestes à partir de l'observation de franges d'interférences et ne permettent pas de délivrer des images permettant l'observation de scènes étendues.

Comme le sait l'homme de l'art, l'observation de scènes (ou sources) étendues, comme par exemple la terre ou une partie de celle-ci, à haute résolution depuis l'espace, et en particulier depuis des orbites hautes, nécessite des télescopes de grand diamètre, typiquement supérieur à 10 mètres pour une résolution métrique depuis une orbite géostationnaire. Or, la difficulté de réalisation des miroirs ainsi que leur poids augmente avec leur diamètre. En outre, la capacité des lanceurs (déterminée notamment par le volume de leur coiffe) limitant naturellement la taille des instruments embarqués, il est donc difficile d'envisager la construction d'instruments d'observation de grande taille fondés sur l'utilisation de miroirs monolithiques.

Pour remédier à ces inconvénients, il a été proposé de réaliser des instruments d'observation à synthèse d'ouverture optique. De tels instruments sont constitués d'au moins deux moyens de collection de lumière, comme par exemple des « petits » miroirs, généralement plan, ou des portions d'un « grand » miroir, ou encore des télescopes, renvoyant les faisceaux lumineux, qu'ils collectent et qui proviennent de la scène observée, vers une optique de combinaison de faisceaux de type interférométrique délivrant un faisceau d'observation destiné à un détecteur.

L'intérêt de ce type d'instrument, hormis le fait qu'il peut être embarqué, réside dans le fait que son détecteur peut délivrer des images dont la résolution est meilleure (et donc offre plus de détails) que celle que pourrait offrir chaque moyen de collection de lumière pris séparément et comparable à celle que pourrait offrir un miroir monolithique de grand diamètre.

Les moyens de collection, qui forment la pupille de l'instrument d'observation, doivent bien entendu être disposés selon une géométrie particulière définie par des règles de remplissage énergétique du plan des fréquences. Cela impose donc le respect de contraintes telles que l'isotropie (ou la quasi-isotropie) de la fonction de transfert optique (ou FTO), l'absence de zones d'annulation dans la FTO et la minimisation de la redondance des fréquences observées.

Mais, lorsque l'instrument est embarqué, pour remplir une mission d'observation choisie, d'autres paramètres importants doivent être également pris en compte.

En effet, un paramètre tel que le champ d'observation de l'instrument est fortement dépendant du type des moyens de collection de lumière et du type des moyens de recombinaison. Il peut notamment s'avérer plus petit que celui présenté par un instrument classique (comportant un grand miroir monolithique). C'est notamment le cas lorsque les moyens de collection de lumière et les moyens de recombinaison définissent un interféromètre de type Michelson, en raison des aberrations introduites par les nombreuses pièces optiques et du fait du principe de recombinaison.

L'encombrement est encore un autre paramètre important à prendre en compte. Ainsi, l'utilisation de moyens de collection de lumière et de moyens de recombinaison définissant un interféromètre de type Fizeau permet d'obtenir un champ d'observation comparable à celui d'un instrument classique, mais pour un encombrement élevé.

Le nombre de moyens de collection de lumière utilisés constitue encore un autre paramètre important. En effet, la probabilité de panne est fonction de la complexité de l'instrument d'observation et donc du nombre de ses moyens de collection de lumière.

Aucun instrument d'observation connu n'apportant une entière satisfaction, l'invention a donc pour but d'améliorer la situation.

Elle propose à cet effet un instrument d'observation à synthèse d'ouverture optique, comportant, d'une part, au moins deux dispositifs d'observation indépendants comprenant chacun au moins deux moyens de collection de lumière délivrant des faisceaux optiques et présentant un champ d'observation et une résolution choisis, et d'autre part, des moyens de recombinaison chargés de recombiner de façon interférométrique les faisceaux optiques délivrés par les différents dispositifs afin de délivrer un faisceau optique final associé à une résolution meilleure que, ou équivalente à, la plus faible résolution des dispositifs et/ou à un champ d'observation inférieur ou égal au plus grand champ d'observation des dispositifs.

On entend ici par « meilleure résolution » une résolution de valeur inférieure, c'est-à-dire permettant de différencier des éléments de plus petite dimension.

L'instrument selon l'invention peut comporter d'autres caractéristiques qui pourront être prises séparément ou en combinaison, et notamment :
- un détecteur principal sensiblement placé dans un plan de focalisation du faisceau final,
- au moins trois dispositifs,
- chaque dispositif peut comprendre au moins trois moyens de collection de lumière,
- chaque moyen de collection de lumière peut être un miroir, une portion d'un miroir ou un télescope,
- chaque dispositif d'observation peut disposer de son propre plan focal et comprendre des moyens de recombinaison chargés de recombiner de façon interférométrique une partie au moins des faisceaux optiques qui sont délivrés par ses moyens de collection de lumière afin de délivrer au moins un faisceau optique d'observation,
   ➢ chaque dispositif peut comprendre un détecteur auxiliaire chargé de collecter la partie des faisceaux recombinés de façon interférométrique par ses moyens de recombinaison, afin de délivrer une image,
      ■ chaque dispositif peut comprendre des moyens d'interception chargés de prélever une partie au moins des faisceaux qui sont délivrés par chacun de ses moyens de collection de lumière afin d'orienter la partie prélevée vers ses moyens de recombinaison. Dans ce cas, les moyens d'interception comprennent par exemple des lames séparatrices implantées respectivement dans chacun des moyens de collection de lumière. En variante, chaque lame peut être remplacée par un miroir solidarisé à des moyens de déplacement pouvant prendre au moins une première position dans laquelle ils permettent au miroir associé de prélever l'intégralité du faisceau délivré par le moyen de collection de lumière correspondant et une seconde position dans laquelle ils permettent au miroir associé de laisser passer le faisceau délivré par le moyen de collection de lumière correspondant de sorte qu'il puisse être recombiné par les moyens de recombinaison,
   > en variante, chaque dispositif peut comprendre des moyens d'interception prélevant une partie au moins des faisceaux optiques d'observation, délivrés par les moyens de recombinaison, afin de les orienter vers le détecteur auxiliaire,
      ■ les moyens d'interception comprennent par exemple une lame séparatrice de prélèvement implantée en un endroit choisi sur le trajet des faisceaux optiques d'observation. En variante, cette lame peut être remplacée par un miroir solidarisé à des moyens de déplacement chargés de prendre au moins une première position dans laquelle ils permettent au miroir de prélever l'intégralité des faisceaux délivrés par les moyens de recombinaison et une seconde position dans laquelle ils permettent au miroir de laisser passer les faisceaux délivrés par les moyens de recombinaison afin qu'ils puissent être recombinés par les moyens de recombinaison.

L'invention est particulièrement bien adaptée, bien que de façon non exclusive, à l'observation de scènes étendues au moyen de satellites effectuant des vols en formation et sur lesquels sont embarqués les différents constituants d'un instrument d'observation du type de celui présenté ci-avant. Mais, l'invention est également adaptée à une architecture connectée dans laquelle les différents constituants sont liés entre eux par une structure rigide ou déployable.

D'autres caractéristiques et avantages de l'invention apparaîtront à l'examen de la description détaillée ci-après, et des dessins annexés, sur lesquels :
- la figure 1 illustre de façon très schématique un exemple de configuration d'un instrument d'observation selon l'invention, comportant trois dispositifs d'observation comprenant chacun trois moyens de collection de lumière,
- la figure 2 illustre de façon schématique, dans une vue en coupe transversale, un premier exemple de réalisation d'une partie d'un instrument d'observation selon l'invention, dans lequel les dispositifs constituent des interféromètres de type Michelson,
- la figure 3 illustre de façon schématique, dans une vue en coupe transversale, un second exemple de réalisation d'une partie d'un instrument d'observation selon l'invention, dans lequel les dispositifs constituent des interféromètres de type Fizeau, et
- la figure 4 illustre de façon schématique un exemple de FTO d'un instrument d'observation selon l'invention, le support de la fonction de transfert de modulation (FTM) étant matérialisé par le disque en pointillés qui matérialise la demi-fréquence d'échantillonnage (ou fréquence de Nyquist) qui fixe la plus grande fréquence observée dans un paysage.

Les dessins annexés pourront non seulement servir à compléter l'invention, mais aussi contribuer à sa définition, le cas échéant.

L'invention a pour objet de permettre la réalisation d'instruments d'observation à synthèse d'ouverture optique et à champ d'observation et/ou résolution variable(s).

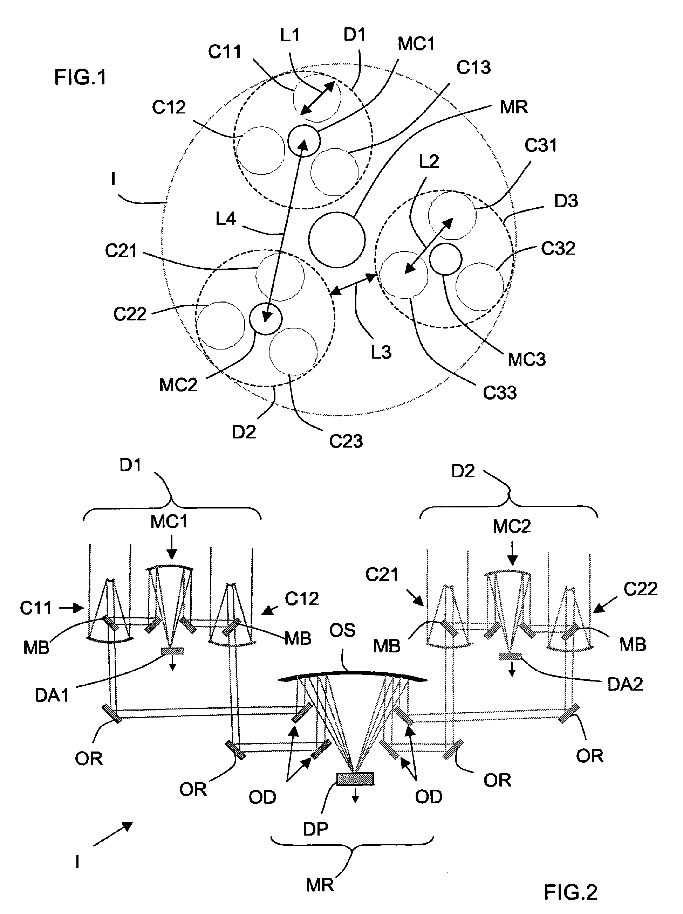

On se réfère tout d'abord à la figure 1 pour présenter un instrument d'observation à synthèse d'ouverture optique I, selon l'invention.

L'instrument I comprend au moins deux dispositifs d'observation Di indépendants, embarqués sur des satellites indépendants ou sur une structure connectée, et des moyens de recombinaison de faisceaux MR, également embarqués sur un autre satellite ou sur la même structure. Dans l'exemple illustré, l'instrument comprend trois dispositifs d'observation Di (i = 1 à 3), mais il peut en comporter plus de trois ou bien seulement deux.

Chaque dispositif d'observation Di comprend au moins deux moyens de collection de lumière (ci-après appelés collecteurs) Cij délivrant des faisceaux de lumière, représentatifs de la (ou des) scène(s) (ou source(s)) qu'ils observent, et présente un champ d'observation COi et une résolution Ri choisis. Dans l'exemple illustré, chaque dispositif d'observation Di comprend trois collecteurs Cij (j = 1 à 3), mais il peut en comporter plus de trois ou bien seulement deux. Par ailleurs, le nombre et la taille des collecteurs Cij appartenant à chaque dispositif d'observation Di peuvent varier d'un dispositif à l'autre.

Il est important de noter que les collecteurs Cij d'un dispositif d'observation Di peuvent éventuellement être embarqués sur des satellites différents.

Les moyens de recombinaison MR sont agencés de manière à recombiner de façon interférométrique les faisceaux optiques qui sont délivrés par les différents dispositifs d'observation Di, afin de délivrer un faisceau optique final auquel sont associés une résolution R meilleure que, ou équivalente à, la plus faible résolution Ri des dispositifs d'observation Di et/ou un champ d'observation CO qui est inférieur ou égal au plus grand champ d'observation COi des dispositifs d'observation Di.

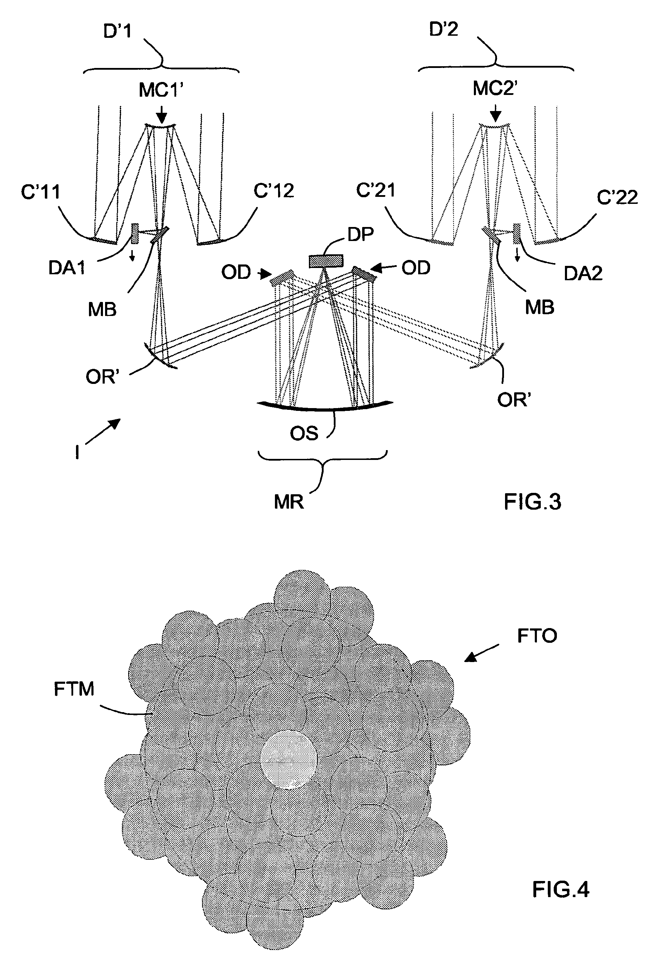

De préférence, l'instrument I comporte également un détecteur principal DP implanté en sortie (ou en aval) de ses moyens de recombinaison MR, comme illustré sur les figures 2 et 3 sur lesquelles on reviendra plus loin, et chargé de délivrer des images de la (ou des) scène(s) observée(s) par les différents dispositifs Di, à partir du faisceau optique final délivré par lesdits moyens de recombinaison MR. Ce détecteur principal DP est préférentiellement installé dans le plan focal de l'instrument I.

Egalement de préférence, chaque dispositif Di comporte des moyens de recombinaison MCi chargés de recombiner de façon interférométrique les faisceaux de lumière qui sont délivrés par ses collecteurs Cij afin de délivrer au moins un faisceau optique d'observation. Ainsi, chaque dispositif Di constitue un interféromètre présentant son propre plan focal, et l'instrument I selon l'invention constitue une combinaison interférométrique de N (i = 1 à N) (sous-) instruments D1 à DN.

Par ailleurs, chaque dispositif Di comporte préférentiellement un détecteur auxiliaire DAi implanté en sortie (ou en aval) de ses moyens de recombinaison MCi, comme illustré sur les figures 2 et 3, et chargé de délivrer des images de la scène observée par les collecteurs Cij associés, à partir du faisceau optique d'observation délivré par lesdits moyens de recombinaison MCi.

Lorsque l'instrument I dispose d'un détecteur principal DP et de détecteurs auxiliaires DAi, il est en mesure de fonctionner selon au moins trois modes.

Un premier mode correspond à une situation dans laquelle tous les dispositifs Di de l'instrument I fonctionnent simultanément et délivrent des faisceaux de lumière provenant de la (ou des) scène(s) qu'ils observent. Dans ce cas, l'instrument I est la combinaison interférométrique de ses différents dispositifs (« I = D1 + D2 + ... + DN ») et les images que délivre son détecteur principal DP correspondent à une résolution R (de valeur) inférieure (et donc meilleure) à chacune des résolutions Ri des différents dispositifs Di.

Par exemple, en présence de trois dispositifs Di sensiblement identiques offrant un champ d'observation COi et une résolution Ri d'environ 3 mètres, l'instrument I présente un champ d'observation CO égal à environ COi/3 et une résolution R égale à environ Ri/3, soit d'environ 1 mètre.

Un deuxième mode correspond à une situation dans laquelle seul l'un des dispositifs Di de l'instrument I fonctionne et délivre un ou plusieurs faisceaux de lumière provenant de la scène qu'il observe. Dans ce cas, l'instrument I est équivalent au seul dispositif Di fonctionnant (« I = Di ») et les images qu'il délivre sont celles fournies par le détecteur auxiliaire DAi du dispositif Di, lesquelles correspondent à la résolution Ri (de valeur) supérieure à R (et donc moins bonne) et au champ d'observation COi supérieur à CO.

Ce deuxième mode peut résulter d'un choix délibéré et momentané ou bien d'un dysfonctionnement survenu au niveau de l'un au moins des dispositifs de l'instrument I ou au niveau dudit instrument I (par exemple en raison d'un problème de miroir de renvoi ou de collection). L'invention est ici avantageuse car elle permet de continuer à faire fonctionner l'instrument I avec une résolution (de valeur) supérieure (et donc moins bonne) en cas de panne partielle.

Un troisième mode correspond à une situation dans laquelle au moins deux dispositifs Di et Di' de l'instrument I fonctionnent (ou sont utilisés) simultanément et délivrent des faisceaux de lumière provenant de scènes sensiblement identiques qu'ils observent respectivement. Dans ce cas, l'instrument I est équivalent à la somme des dispositifs qui fonctionnent et les images qu'il délivre sont celles fournies séparément par les détecteurs auxiliaires DAi et DAi' des dispositifs Di et Di', lesquelles correspondent respectivement à des résolutions Ri et Ri' (de valeurs) supérieures à R (et donc moins bonnes) et aux champs d'observation COi et COi' supérieurs à CO, et/ou à la combinaison interférométrique des dispositifs Di et Di' et les images que délivre son détecteur principal DP correspondent à une résolution R' (de valeur) supérieure à R (et donc moins bonne) mais (de valeur) inférieure à (et donc meilleure que) chacune des résolutions Ri et Ri' des différents dispositifs Di, pour un champ d'observation CO' supérieur à CO.

Ce troisième mode peut résulter d'un choix délibéré et momentané ou bien d'un dysfonctionnement survenu au niveau de l'un au moins des dispositifs de l'instrument I ou au niveau dudit instrument I (par exemple en raison d'un problème de miroir de renvoi ou de collection). Par ailleurs, ce troisième mode permet d'augmenter le champ d'observation CO' lorsque les dispositifs qui fonctionnent (ou sont utilisés) observent des scènes différentes mais contiguës (effet de mosaïque) et donc que l'instrument ne fonctionne pas en mode interférométrique. Ce troisième mode permet également de surveiller N zones ou scènes (ou sources) différentes non contiguës en parallèle (hors mode interférométrique). En outre ce troisième mode peut permettre de délivrer à la fois des images de bonne résolution au moyen du détecteur principal DP (gros plan ou « zoom ») et des images de moins bonne résolution, d'une zone d'intérêt particulière, au moyen du détecteur auxiliaire de l'un des dispositifs.

Le nombre de dispositifs d'observation Di choisis, le nombre de collecteurs Cij choisis pour chaque dispositif Di, le type de chaque collecteur Cij, les dimensions L1 des collecteurs Cij, les distances L2 entre collecteurs Cij, les distances L3 entre les « bords » des dispositifs Di et les distances L4 entre les centres des dispositifs Di sont choisis de sorte que l'instrument I présente, comme illustré sur la figure 4, une fonction de transfert optique (ou FTO) isotrope (ou quasi-isotrope), une FTO dépourvue de zone d'annulation, et des fréquences observées dont la redondance est minimisée.

Plus précisément, il s'agit ici d'optimiser conjointement la configuration pupillaire de l'instrument I devant délivrer une image haute résolution, et la configuration pupillaire de chaque dispositif (ou interféromètre) Di placé sur l'une des voies interférométriques de l'instrument I.

Le choix du type des dispositifs (ou interféromètres) Di est fonction principalement de l'encombrement, de la complexité, de la résolution R et des champs d'observation CO et COi. Ce choix peut par exemple se faire entre des interféromètres de type Michelson ou Fizeau.

Une partie d'un instrument d'observation I, comportant des dispositifs Di constituant des interféromètres à grand champ de type Michelson, est illustrée schématiquement dans une vue en coupe sur la figure 2. Dans cet exemple seuls deux dispositifs D1 et D2 sont combinés à des moyens de recombinaison MR en raison de la vue en coupe transversale. Mais, l'instrument peut comporter trois ou quatre dispositifs Di, voire même plus. De même, dans cet exemple seuls deux collecteurs (C11, C12), (C21, C22) apparaissent combinés à des moyens de recombinaison MC1, MC2, en raison de la vue en coupe transversale. Mais, chaque dispositif Di peut comporter trois ou quatre collecteurs Cij, voire même plus.

Chaque dispositif Di (par exemple D1), de type Michelson, comprend au moins deux collecteurs C11 et C12 agencés chacun sous la forme d'un télescope. Chaque télescope C11 ou C12 collecte la lumière provenant de la scène vers laquelle il pointe et délivre un faisceau qui est destiné à être transmis aux moyens de recombinaison MR et/ou aux moyens de recombinaison MC1. A cet effet, on prévoit dans le télescope C11 ou C12 une lame séparatrice ou un miroir MB (par exemple de type plan) susceptible d'être basculée par des moyens de déplacement (non représentés) entre au moins une première position dans laquelle ledit miroir MB peut prélever l'intégralité du faisceau collecté pour qu'il soit recombiné par les moyens de recombinaison MC1 à l'autre faisceau collecté, et une seconde position dans laquelle ledit miroir MB laisse passer le faisceau collecté pour qu'il puisse être recombiné par les moyens de recombinaison MR à l'autre faisceau collecté.

Les moyens de recombinaison MC1 combinent les faisceaux prélevés par les miroirs MB afin de délivrer un faisceau optique d'observation qui est orienté vers le détecteur auxiliaire DA1 destiné à délivrer des images de basse résolution R1 et de champ d'observation CO1. Pour ce faire, les moyens de recombinaison MC1 comportent par exemple un miroir parabolique, mais ils peuvent être plus complexes.

La portion du faisceau, collectée par un collecteur C11 ou C12, est dirigée en direction des moyens de recombinaison MR au moyen d'une optique OR, telle que, par exemple, un miroir plan. Les optiques OR sont embarquées sur le même satellite ou sur la même structure que le dispositif D1 ou D2.

Les moyens de recombinaison MR comportent des optiques OD, telles que, par exemple, des miroirs plans, en nombre égal au nombre de collecteurs Cij des différents dispositifs d'observation Di afin de diriger chacun des faisceaux collectés, délivrés par les différents collecteurs Cij, vers une optique de recombinaison OS, telle que, par exemple, un miroir parabolique. L'optique de recombinaison OS est chargée de recombiner les différents faisceaux, collectés par les collecteurs Cij des différents dispositifs d'observation Di, afin de délivrer un faisceau optique final, de préférence au détecteur principal DP implanté sur son satellite dans le plan focal de l'instrument d'observation I. Des dispositifs supplémentaires, chargés d'équilibrer la longueur des chemins optiques de chacun des bras des interféromètres Di et de l'instrument d'observation I, peuvent être nécessaires bien qu'ils ne soient pas représentés sur la figure 2.

On se réfère maintenant à la figure 3 pour décrire une partie d'un instrument d'observation I comportant des dispositifs Di constituant des interféromètres à grand champ de type Fizeau. Dans cet exemple seuls deux dispositifs D'1 et D'2 sont combinés à des moyens de recombinaison MR en raison de la vue en coupe transversale. Mais, l'instrument peut comporter trois ou quatre dispositifs D'i, voire même plus. De même, dans cet exemple seuls deux collecteurs (C'11, C'12), (C'21, C'22) apparaissent combinés à des moyens de recombinaison MC1', MC2', en raison de la vue en coupe transversale. Mais, chaque dispositif D'i peut comporter trois ou quatre collecteurs C'ij, voire même plus.

Chaque dispositif D'i (par exemple D'1), de type Fizeau, comprend au moins deux collecteurs C'11 et C'12 agencés chacun sous la forme d'un miroir convexe. Chaque collecteur C'11 ou C'12 collecte la lumière provenant de la scène vers laquelle il pointe et délivre un faisceau qui est destiné à être transmis aux moyens de recombinaison MC1'.

Les moyens de recombinaison MC1' recombinent les faisceaux collectés par les collecteurs C'11 et C'12 afin de délivrer des faisceaux optiques d'observation. Pour ce faire, les moyens de recombinaison MC1' comportent par exemple un miroir concave ou un dispositif plus complexe. Lorsque le dispositif d'observation D'i comporte un détecteur auxiliaire DA1, destiné à délivrer des images de basse résolution R1 et de champ d'observation CO1, on prévoit sur le trajet du faisceau optique d'observation une lame séparatrice qui permet le passage d'une première partie des faisceaux optiques d'observation vers les moyens de recombinaison MR et le prélèvement d'une seconde partie complémentaire desdits faisceaux optiques d'observation pour alimenter le détecteur auxiliaire DA1, ou un miroir plan susceptible d'être basculé par des moyens de déplacement (non représentés) entre au moins une première position dans laquelle ledit miroir MB peut prélever l'intégralité des faisceaux optiques d'observation pour qu'ils soient dirigés vers le détecteur auxiliaire DA1 et une seconde position dans laquelle ledit miroir MB laisse passer les faisceaux optiques d'observation pour qu'ils puissent être recombinés par les moyens de recombinaison MR aux autres faisceaux optiques d'observation provenant des autres dispositifs d'observation D'2.

La portion des faisceaux optiques d'observation délivrée par un dispositif D'1 est dirigée en direction des moyens de recombinaison MR au moyen d'une optique OR', telle qu'un miroir parabolique ou un dispositif plus complexe. Les optiques OR' sont embarquées sur le même satellite ou sur la même structure que le dispositif D'1 ou D'2. Les moyens de recombinaison MR comportent des optiques OD, telles que des miroirs plans ou des dispositifs plus complexes, par exemple en nombre égal au nombre de dispositifs d'observation D'i afin de diriger chacun des faisceaux optiques d'observation, délivrés par les moyens de recombinaison MCi', vers une optique de recombinaison OS, telle qu'un miroir parabolique ou un dispositif plus complexe. L'optique de recombinaison OS est chargée de recombiner les différents faisceaux optiques d'observation, délivrés par les moyens de recombinaison MCi' des différents dispositifs d'observation D'i, afin de délivrer un faisceau optique final, de préférence au détecteur principal DP implanté sur son satellite ou sur la même structure dans le plan focal de l'instrument d'observation I.

Des dispositifs supplémentaires chargés d'équilibrer la longueur des chemins optiques de chacun des bras des interféromètres D'i et de l'instrument d'observation I peuvent être nécessaires, bien qu'ils ne soient pas représentés sur la figure 3.

Grâce à l'invention, il est possible d'acquérir simultanément des images haute et basse résolutions, permettant ainsi d'avoir un effet de zoom instantané conférant efficacité et souplesse. Par ailleurs, l'invention permet d'effectuer des observations simultanées avec un grand champ d'observation dans des directions différentes, ce qui est particulièrement avantageux lorsque l'on effectue des observations en orbite haute (par exemple géostationnaire). En outre, le fait que l'invention permette un agrandissement du champ d'observation par un effet de mosaïque instrumental direct est également avantageux du fait que les images résultantes ne présentent pas d'effet de parallaxe important en orbite haute. Enfin, l'invention permet de sauver une mission d'observation suite à la perte d'un ou plusieurs dispositifs d'observation de l'instrument d'observation I, ce qui est particulièrement avantageux, en particulier dans le cas d'un vol en formation.

L'invention ne se limite pas aux modes de réalisation d'instrument d'observation décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans lequel l'instrument d'observation était réparti sur plusieurs satellites volant en formation. Mais, l'invention n'est pas limitée à cette application. L'instrument d'observation peut en effet être intégralement embarqué sur une unique structure connectée (ou fixe) ou déployable, comme par exemple un unique satellite.

Par ailleurs, l'instrument d'observation selon l'invention n'est pas exclusivement destiné à l'imagerie. Il peut en effet également servir à la détection. Dans ce cas, les contraintes d'isotropie et de minimisation de redondance de fréquences sont relâchées.

## Revendications

1. Instrument d'observation à synthèse d'ouverture optique (1), comportant, d'une part, au moins deux dispositifs d'observation (Di ;D'i) indépendants délivrant des faisceaux optiques et présentant un champ d'observation (COi) et une résolution (Ri) choisis, et d'autre part, des premiers moyens de recombinaison (MR) agencés pour recombiner de façon interférométrique les faisceaux optiques délivrés par lesdits dispositifs (Di ;D'i) de manière à délivrer un faisceau optique final associé à une résolution (R) meilleure ou équivalente à la plus faible résolution desdits dispositifs (Di ;D'i) et/ou à un champ d'observation (CO) inférieur ou égal au plus grand champ d'observation desdits dispositifs (Di ;D'i), et un détecteur principal (DP) sensiblement placé dans un plan de focalisation dudit faisceau final pour délivrer une première image d'une scène observée, **caractérisé en ce que** :
- chaque dispositif d'observation (Di ;D'i) est un interféromètre qui présente un plan focal propre et comprend au moins deux moyens de collection de lumière (Cij ;C'ij) et des second moyens de recombinaison propres (MCi ;MCi') agencés pour combiner de façon interférométrique une partie au moins des faisceaux optiques délivrés par ses deux moyens de collection de lumière (Cij ;C'ij) de manière à délivrer au moins un deuxième faisceau optique d'observation.
- chaque dispositif (Di ;D'i) comprend un détecteur auxiliaire (DAi) propre à collecter ladite partie des faisceaux recombinés de façon interférométrique par lesdits second moyens de recombinaison (MCi ;MCi'), de manière à délivrer une deuxième image de la scène observée.

2. Instrument selon la revendication 1, **caractérisé en ce que** chaque dispositif (Di) comprend des moyens d'interception (MB) agencés pour prélever une partie au moins des faisceaux délivrés par chacun de ses moyens de collection de lumière (Cij), de manière à orienter ladite partie prélevée vers ses moyens de recombinaison (MCi).

3. Instrument selon la revendication 2, **caractérisé en ce que** lesdits moyens d'interception (MB) comprennent des miroirs de prélèvement implantés respectivement dans chacun desdits moyens de collection de lumière (Cij).

4. Instrument selon la revendication 3, **caractérisé en ce que** lesdits moyens d'interception (MB) sont des lames séparatrices.

5. Instrument selon la revendication 3, **caractérisé en ce que** chacun desdits miroirs (MB) est solidarisé à des moyens de déplacement agencés pour prendre au moins une première position dans laquelle ils permettent au miroir (MB) associé de prélever l'intégralité du faisceau délivré par le moyen de collection de lumière (Cij) correspondant et une seconde position dans laquelle ils permettent au miroir (MB) associé de laisser passer le faisceau délivré par le moyen de collection de lumière (Cij) correspondant de sorte qu'il puisse être recombiné par lesdits moyens de recombinaison (MR).

6. Instrument selon la revendication 1, **caractérisé en ce que** chaque dispositif (D'i) comprend des moyens d'interception (MB) agencés pour prélever une partie au moins des faisceaux optiques d'observation délivrés par lesdits moyens de recombinaison (MCi'), de manière à les orienter vers ledit détecteur auxiliaire (DAi).

7. Instrument selon la revendication 6, **caractérisé en ce que** lesdits moyen d'interception (MB) comprennent une lame séparatrice implantée en un endroit choisi sur le trajet des faisceaux optiques d'observation.

8. Instrument selon la revendication 6, **caractérisé en ce que** lesdits moyens d'interception (MB) comprennent un miroir de prélèvement implanté en un endroit choisi sur le trajet des faisceaux optiques d'observation.

9. Instrument selon la revendication 8, **caractérisé en ce que** ledit miroir (MB) est solidarisé à des moyens de déplacement agencés pour prendre au moins une première position dans laquelle ils permettent audit miroir (MB) de prélever l'intégralité du faisceau délivré par lesdits moyens de recombinaison (MCi') et une seconde position dans laquelle ils permettent audit miroir (MB) de laisser passer le faisceau délivré par lesdits moyens de recombinaison (MCi') de sorte qu'il puisse être recombiné par lesdits moyens de recombinaison (MR).

10. Instrument selon l'une des revendications 1 à 9, **caractérisé en ce qu'**il comprend au moins trois dispositifs (Di ;D'i).

11. Instrument selon l'une des revendications 1 à 10, **caractérisé en ce que** chaque dispositif (Di ;D'i) comprend au moins trois moyens de collection de lumière (Cij ;C'ij).

12. Instrument selon l'une des revendications 1 à 11, **caractérisé en ce que** chaque moyen de collection de lumière (Cij ;C'ij) est choisi dans un groupe comprenant au moins un miroir, une portion d'un miroir et un télescope.

13. Instrument selon l'une des revendications 1 à 12, **caractérisé en ce que** lesdits dispositifs (Di ;D'i) et lesdits moyens de recombinaison (MR) sont embarqués sur des satellites différents destinés à effectuer un vol en formation.

14. Instrument selon l'une des revendications 1 à 12, **caractérisé en ce que** lesdits dispositifs (Di ;D'i) et lesdits moyens de recombinaison (MR) sont embarqués sur une structure connectée.

15. Instrument selon l'une des revendications 1 à 12, **caractérisé en ce que** lesdits dispositifs (Di ;D'i) et lesdits moyens de recombinaison (MR) sont embarqués sur une structure déployable.

16. Instrument selon l'une des revendications précédentes, **caractérisé en ce qu'**il comporte une fonction de transfert optique (FTO) dépourvue de zone d'annulation.

## Claims

1. An observation instrument with synthetic aperture optics (I) comprising, on the one hand, at least two independent observation devices (Di; D'i) providing optical beams and having a selected field of observation (COi) and a selected resolution (Ri), and on the other hand, first recombination means (MR) arranged to recombine in an interferometric manner the optical beams provided by said devices (Di; D'i) so as to provide a final optical beam associated with a resolution (R) which is better than or equivalent to the weakest resolution of said devices (Di; D'i) and/or a field of observation (CO) which is less than or equal to the largest field of observation of said devices (Di; D'i), and a main detector (DP) substantially placed in a focalisation plane of said final beam in order to provide a first image of an observed scene, **characterised in that**:
- each observation device (Di; D'i) is an interferometer which has a specific focal plane and comprises at least two light collection means (Cij; C'ij) and second specific recombination means (MCi; MCi') arranged to combine in an interferometric manner at least part of the optical beams provided by its two light collection means (Cij; C'ij) so as to provide at least one second optical observation beam,
- each device (Di; D'i) comprises an auxiliary detector (DAi) designed to collect said part of the beams recombined in an interferometric manner by said second recombination means (MCi; MCi'), so as to provide a second image of the observed scene.

2. The instrument according to claim 1, **characterised in that** each device (Di) comprises interception means (MB) arranged to take at least part of the beams delivered by each of its light collection means (Cij), so as to direct said sampled part toward its recombination means (MCi).

3. The instrument according to claim 2, **characterised in that** said interception means (MB) include sampling mirrors respectively installed in each of said light collection means (Cij).

4. The instrument according to claim 3, **characterised in that** said interception means (MB) are beam splitters.

5. The instrument according to claim 3, **characterised in that** each of said mirrors (MB) is integral with displacement means arranged to assume at least one first position in which they allow the associated mirror (MB) to sample the entirety of the beam provided by the corresponding light collection means (Cij) and to assume a second position in which they allow the associated mirror (MB) to transmit the beam provided by the corresponding light collection means (Cij), so that it may be recombined using said recombination means (MR).

6. The instrument according to claim 1, **characterised in that** each device (D'i) comprises interception means (MB) arranged to sample at least part of the optical observation beams provided by said recombination means (MCi'), so that they can be directed toward said auxiliary detector (DAi).

7. The instrument according to claim 6, **characterised in that** said interception means (MB) include a separating plate installed at a selected location in the path of the optical observation beams.

8. The instrument according to claim 6, **characterised in that** said interception means (MB) include a sampling mirror installed at a selected location in the path of the optical observation beams.

9. The instrument according to claim 8, **characterised in that** said mirror (MB) is integral with displacement means arranged to assume at least one first position in which they allow said mirror (MB) to sample the entirety of the beam provided by said recombination means (MCi') and to assume a second position in which they allow said mirror (MB) to admit the beam which is provided by said recombination means (MCi'), so that it may be recombined by said recombination means (MR).

10. The instrument according to any one of claims 1 to 9, **characterised in that** it comprises at least three devices (Di; D'i).

11. The instrument according to any one of claims 1 to 10, **characterised in that** each device (Di; D'i) comprises at least three light collection means (Cij; C'ij).

12. The instrument according to any one of claims 1 to 11, **characterised in that** each light collection means (Cij; C'ij) is selected from a group comprising at least one mirror, one section of a mirror and one telescope.

13. The instrument according to any one of claims 1 to 12, **characterised in that** said devices (Di; D'i) and said recombination means (MR) are placed on board different satellites designed to fly in formation.

14. The instrument according to any one of claims 1 to 12, **characterised in that** said devices (Di; D'i) and said recombination means (MR) are placed on board a connected structure.

15. The instrument according to any one of claims 1 to 12, **characterised in that** said devices (Di; D'i) and said recombination means (MR) are placed on board a deployable structure.

16. The instrument according to anyone of the previous claims, **characterised in that** it includes an optical transfer function (FTO) with no cancellation zone.

## Patentansprüche

1. Beobachtungsinstrument mit Apertursynthese (I), das Folgendes umfasst:
einerseits wenigstens zwei unabhängige Beobachtungsgeräte (Di; D'i), die optische Strahlen erzeugen und ein gewähltes Beobachtungsfeld (COi) und eine gewählte Auflösung (Ri) haben, und andererseits erste Rekombinationsmittel (MR) zum Rekombinieren der von den Geräten (Di; D'i) erzeugten optischen Strahlen auf eine interferometrische Weise, um einen optischen Endstrahl zu erzeugen, der mit einer Auflösung (R), die besser als die oder äquivalent mit der schwächste(n) Auflösung der Geräte (Di; D'i) ist, und/oder mit einem Beobachtungsfeld (CO) assoziiert ist, das gleich oder kleiner als das größte Beobachtungsfeld der Geräte (Di; D'i) ist, und einen Hauptdetektor (DP), der sich im Wesentlichen in einer Fokalisierungsebene des Endstrahls befindet, um ein erstes Bild einer beobachteten Szene zu liefern, **dadurch gekennzeichnet, dass**:
- jedes Beobachtungsgerät (Di; D'i) ein Interferometer ist, das eine spezifische Fokalebene hat und wenigstens zwei Lichtkollektionsmittel (Cij; C'ij) und zweite spezifische Rekombinationsmittel (MCi; MCi') zum Kombinieren wenigstens eines Teils der von seinen beiden Lichtkollektionsmitteln (Cij; C'ij) gelieferten optischen Strahlen auf eine interferometrische Weise umfasst, um wenigstens einen zweiten optischen Beobachtungsstrahl zu liefern,
- jedes Gerät (Di; D'i) einen Zusatzdetektor (DAi) zum Sammeln des Teils der Strahlen umfasst, die von den zweiten Rekombinationsmitteln (MCi; MCi') auf interferometrische Weise rekombiniert wurden, um ein zweites Bild der beobachteten Szene zu liefern.

2. Instrument nach Anspruch 1, **dadurch gekennzeichnet, dass** jedes Gerät (Di) Abfangmittel (MB) zum Abgreifen wenigstens eines Teils der von jedem seiner Lichtkollektionsmittel (Cij) gelieferten Lichtstrahlen umfasst, um den abgegriffenen Teil in Richtung seiner Rekombinationsmittel (MCi) zu leiten.

3. Instrument nach Anspruch 2, **dadurch gekennzeichnet, dass** die Abfangmittel (MB) Abgreifspiegel beinhalten, die jeweils in jedem der Lichtkollektionsmittel (Cij) installiert sind.

4. Instrument nach Anspruch 3, **dadurch gekennzeichnet, dass** die Abfangmittel (MB) Strahlteiler sind.

5. Instrument nach Anspruch 3, **dadurch gekennzeichnet, dass** jeder der Spiegel (MB) fest mit Bewegungsmitteln verbunden ist, die angeordnet sind, um wenigstens eine erste Position, in der der assoziierte Spiegel (MB) den gesamten vom entsprechenden Lichtkollektionsmittel (Cij) gelieferten Strahl abgreifen kann, und eine zweite Position einzunehmen, in der der assoziierte Spiegel (MB) den von dem entsprechenden Lichtkollektionsmittel (Cij) gelieferten Strahl durchlassen kann, so dass er durch die Rekombinationsmittel (MR) rekombiniert werden kann.

6. Instrument nach Anspruch 1, **dadurch gekennzeichnet, dass** jedes Gerät (D'i) Abfangmittel (MB) zum Abgreifen wenigstens eines Teils der von den Rekombinationsmitteln (MCi') gelieferten optischen Beobachtungsstrahlen umfasst, so dass sie auf den Zusatzdetektor (DAi) gerichtet werden können.

7. Instrument nach Anspruch 6, **dadurch gekennzeichnet, dass** die Abfangmittel (MB) einen Strahlteiler umfassen, die an einer gewählten Stelle auf der Bahn der optischen Beobachtungsstrahlen installiert ist.

8. Instrument nach Anspruch 6, **dadurch gekennzeichnet, dass** die Abfangmittel (MB) einen Abgreifspiegel beinhalten, der an einer gewählten Stelle auf der Bahn der optischen Beobachtungsstrahlen installiert ist.

9. Instrument nach Anspruch 8, **dadurch gekennzeichnet, dass** der Spiegel (MB) fest mit Bewegungsmitteln verbunden ist, die angeordnet sind, um wenigstens eine erste Position, in der der Spiegel (MB) den gesamten von den Rekombinationsmitteln (MCi') gelieferten Strahl abgreifen kann, und eine zweite Position einzunehmen, in der der Spiegel (MB) den von den Rekombinationsmitteln (MCi') gelieferten Strahl durchlassen kann, so dass er von den Rekombinationsmitteln (MR) rekombiniert werden kann.

10. Instrument nach einem der Ansprüche 1 bis 9, **dadurch gekennzeichnet, dass** es wenigstens drei Geräte (Di; D'i) umfasst.

11. Instrument nach einem der Ansprüche 1 bis 10, **dadurch gekennzeichnet, dass** jedes Gerät (Di; D'i) wenigstens drei Lichtkollektionsmittel (Cij; C'ij) umfasst.

12. Instrument nach einem der Ansprüche 1 bis 11, **dadurch gekennzeichnet, dass** jedes Lichtkollektionsmittel (Cij; C'ij) ausgewählt ist aus einer Gruppe umfassend einen Spiegel, eine Sektion eines Spiegels und ein Teleskop.

13. Instrument nach einem der Ansprüche 1 bis 12, **dadurch gekennzeichnet, dass** sich die Geräte (Di; D'i) und die Rekombinationsmittel (MR) an Bord unterschiedlicher Satelliten befinden, die für einen Formationsflug ausgelegt sind.

14. Instrument nach einem der Ansprüche 1 bis 12, **dadurch gekennzeichnet, dass** sich die Geräte (Di; D'i) und die Rekombinationsmittel (MR) an Bord einer eingebundenen Struktur befinden.

15. Instrument nach einem der Ansprüche 1 bis 12, **dadurch gekennzeichnet, dass** sich die Geräte (Di; D'i) und die Rekombinationsmittel (MR) an Bord einer ausbreitbaren Struktur befinden.

16. Instrument nach einem der vorherigen Ansprüche, **dadurch gekennzeichnet, dass** es eine optische Transferfunktion (FTO) ohne Löschzone umfasst.
